# EUROPEAN PATENT APPLICATION

(11) **EP 4 813 809 A1**
(43) Date of publication of application: **30.09.2026**
(21) Application number: 25220614.9
(22) Date of filing: 04.12.2025
(51) Int. Cl.: B62D 15/02, B60W 30/06

(54) **VEHICLE PERFORMING AUTONOMOUS PARKING FUNCTION AND CONTROL METHOD THEREOF**

(30) Priority: 25.03.2025 KR 20250038067
(71) Applicant: Hyundai Mobis Co., Ltd., Gangnam-gu Seoul 06141 (KR)
(72) Inventor: KIM, Seung Hyun, 16891 Yongin-si (KR)
(74) Representative: Vossius & Partner Patentanwälte Rechtsanwälte mbB

(57) **Abstract**

A vehicle (100) includes a sensor (110) to detect distances to objects around the vehicle (100); and a controller (120) to determine a size of a preferred parking space of the driver based on the distances at a parking position changed within a preset time after use of an autonomous parking system controlling a parking process, and to output at least one of spaces that satisfy the size based on information obtained through the sensor (110).

Figure 1

## Description

### 1. Field

The present disclosure relates to a vehicle performing autonomous parking function and a method for controlling the same, and particularly to a technology for determining a preferred parking space of a driver and performing autonomous parking based thereon.

### Description of the Related Art

Recently, vehicles equipped with autonomous driving and autonomous parking function have been developed and distributed due to advances in automotive technology. In vehicles equipped with autonomous parking function, the vehicle can perform parking by itself without direct manipulation by the driver.

When a driver manipulates a specific switch or inputs an execution command in a vehicle equipped with autonomous parking function, the vehicle system can detect the surrounding environment to search for available parking space and set an optimal parking path to the corresponding space. Thereafter, the vehicle can operate in a manner of automatically moving to the parking space along the set path and then performing alignment and stopping operations to complete parking.

However, drivers may have different preferred parking space sizes depending on vehicle size or parking habits. For example, when a driver has high driving proficiency, there is little inconvenience in parking even in narrow spaces, so there is a high possibility of attempting to park even in relatively small parking spaces. On the other hand, when a driver has low driving proficiency, broader parking spaces may be preferred considering the convenience of parking.

Therefore, a customized autonomous parking function that can adjust parking space size according to individual preferences of drivers is needed, and technology reflecting this is being proposed.

The matters described as the background technology above are only for enhancing understanding of the background of the present disclosure, and should not be taken as acknowledging that they correspond to prior art already known to those having ordinary knowledge in this technical field.

### SUMMARY

Various aspects of the present disclosure are directed to providing a vehicle performing autonomous parking function and a method for controlling the same, and particularly determining a preferred parking space of a driver and performing autonomous parking based thereon.

The technical problems to be achieved in the present disclosure are not limited to the technical problems mentioned above, and other technical problems not mentioned will be clearly understood by those having ordinary knowledge in the technical field belonging to the present disclosure from the description below.

As a means for solving the technical problems, a vehicle according to one embodiment of the present disclosure includes a sensor configured to detect distances to objects around the vehicle; and a controller configured to determine a size of a preferred parking space of the driver based on the distances at a parking position changed within a preset time after use of an autonomous parking system controlling a parking process, and configured to output detection information of spaces that satisfy the size based on information obtained through the sensor.

For example, the size of the preferred parking space may be characterized as being determined based on a lower limit value of a distance among distances to one or more objects located around the vehicle.

For example, the controller may replace the lower limit value of the distance with a distance detected by the sensor when the distance detected by the sensor before the parking position change exceeds the previously determined lower limit value of the distance.

For example, the controller may replace the lower limit value of the distance with a distance detected by the sensor when the distance detected by the sensor at the changed parking position in case of the parking position being changed or at the parking position in case of the parking position not being changed is less than the previously determined lower limit value of the distance of the preferred parking space size.

For example, the lower limit value of the distance may be characterized as being a lateral distance of the preferred parking space.

For example, the controller may assign priorities to spaces that satisfy the size based on the size, presence or types of surrounding objects.

For example, the controller may assign different priorities respectively in case of the sensor not detecting an object, in case of a distance to an object detected by the sensor exceeding an upper limit value of a range of the preferred parking space size, or in case of an object detected by the sensor corresponding to a structure.

For example, the vehicle may further include a display, and the controller may control visual effects corresponding to priorities of the detected spaces to be output through the display based on spaces that satisfy the size being detected using information obtained through the sensor.

Also, a method for determining parking space according to one embodiment includes determining, by a controller, a size of a preferred parking space of a driver based on distances to objects around a vehicle detected by a sensor at a parking position changed within a preset time after use of an autonomous parking system controlling a parking process, and outputting, by the controller, detection information of spaces that satisfy the size based on information obtained through the sensor.

For example, the size of the preferred parking space may be determined based on a lower limit value of a distance among distances to one or more objects located around the vehicle.

According to at least one embodiment of the present disclosure, when a vehicle performs autonomous parking function, it becomes possible to determine a preferred parking space of a driver and perform autonomous parking based thereon.

The effects obtainable from the present disclosure are not limited to the effects mentioned above, and other effects not mentioned will be clearly understood by those having ordinary knowledge in the technical field belonging to the present disclosure from the description below.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 shows an example of vehicle configuration for performing autonomous parking function according to one embodiment of the present disclosure;
FIG. 2 shows a flowchart of a process for determining a size of a preferred parking space of a driver according to one embodiment of the present disclosure;
FIG. 3 shows an example of a form of preferred parking space size according to one embodiment of the present disclosure;
FIGS. 4 and 5 show examples of forms in which a size of preferred parking space is determined when a vehicle moves within a preset time after performing autonomous parking function according to one embodiment of the present disclosure;
FIGS. 6 and 7 show examples of forms in which a size of preferred parking space is determined when a preset time passes after a vehicle performs autonomous parking function or after manual parking according to one embodiment of the present disclosure;
FIGS. 8, 9, 10, and 11 show examples of parking forms by priority of preferred parking space according to one embodiment of the present disclosure;
FIG. 12 shows an example of a form of outputting parking spaces around a vehicle and visual effects corresponding to priorities of each parking space through a display of the vehicle according to one embodiment of the present disclosure;
FIG. 13 shows an example of a form in which a controller provides parking spaces around a vehicle and visual effects corresponding to priorities of parking spaces through an around view monitor of a display according to one embodiment of the present disclosure; and
FIG. 14 shows an example of a form in which a display of a vehicle provides an alarm for whether to activate autonomous parking function after a driver selects a parking space according to one embodiment of the present disclosure.

### DETAILED DESCRIPTION

Hereinafter, embodiments disclosed in the present specification will be described in detail with reference to the accompanying drawings, but the same or similar components will be given the same reference numerals regardless of the drawing symbols, and overlapping descriptions thereof will be omitted. In the following description, suffixes "module" and "unit" for components used are given or used interchangeably only for ease of writing the specification, and do not have meanings or roles that are distinguished from each other by themselves. In addition, in describing the embodiments disclosed in the present specification, when it is determined that a detailed description of related known technology may obscure the gist of the embodiments disclosed in the present specification, the detailed description thereof will be omitted. In addition, the accompanying drawings are only for easy understanding of the embodiments disclosed in the present specification, and the technical ideas disclosed in the present specification are not limited by the accompanying drawings, and should be understood to include all changes, equivalents, and substitutes included in the spirit and technical scope of the present disclosure.

Terms including ordinals such as first, second, etc. may be used to describe various components, but the components are not limited by the terms. The terms are used only for the purpose of distinguishing one component from another component.

When a component is referred to as being "connected" or "connected" to another component, it should be understood that it may be directly connected or connected to the other component, but other components may exist in between. On the other hand, when a component is referred to as being "directly connected" or "directly connected" to another component, it should be understood that no other components exist in between.

Singular expressions include plural expressions unless the context clearly indicates otherwise.

In the present specification, terms such as "comprise" or "have" are intended to designate that a feature, number, step, operation, component, part, or combination thereof described in the specification exists, and should be understood as not excluding in advance the existence or possibility of addition of one or more other features, numbers, steps, operations, components, parts, or combinations thereof.

In addition, Unit or Control Unit included in names such as Motor Control Unit (MCU), Hybrid Control Unit (HCU), etc. is only a term widely used in naming controllers that control specific functions of vehicles, and does not mean a generic function unit. For example, each controller may include a communication device that communicates with other controllers or sensors to control the functions in charge, memory that stores operating systems or logic instructions and input/output information, and one or more processors that perform judgments, calculations, decisions, etc. necessary for controlling the functions in charge. For example, each controller may include a communication device that communicates with other controllers or sensors to control the functions in charge, memory that stores operating systems or logic instructions and input/output information, and one or more processors that perform judgments, calculations, decisions, etc. necessary for controlling the functions in charge.

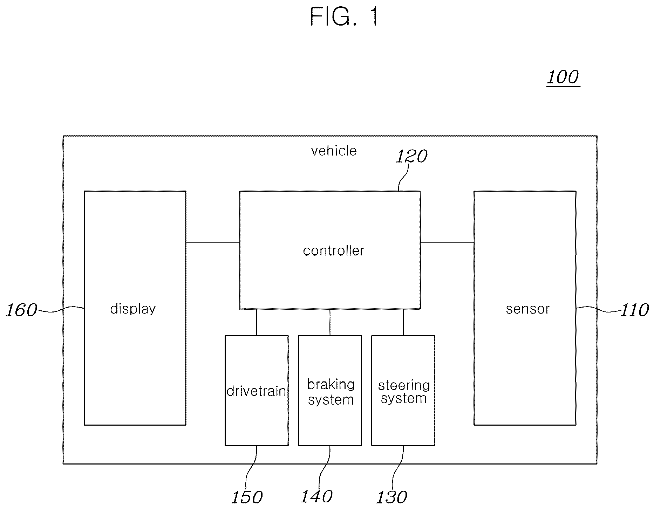

FIG. 1 shows an example of vehicle 100 configuration for performing autonomous parking function according to one embodiment of the present disclosure.

Referring to FIG. 1, vehicle 100 may include sensor 110, controller 120, steering system 130, braking system 140, drivetrain 150, and display 160. However, FIG. 1 shows components mainly related to the description of one embodiment, and an actual vehicle performing autonomous parking function may be implemented to include more components. Hereinafter, each component will be described in more detail.

Sensor 110 may include Light Detection and Ranging (LiDAR) sensor, ultrasonic sensor, radar sensor, and camera, but this is exemplary and is not necessarily limited thereto. In one embodiment of the present disclosure, sensor 110 may detect the presence of objects around vehicle 100 and may measure separation distances between the detected objects and vehicle 100. In addition, sensor 110 may also perform a role of detecting parking spaces around vehicle 100.

Controller 120 may collect data from sensor 110 and analyze it to control major functions of the vehicle. For example, in one embodiment of the present invention, controller 120 may collect information about minimum distance among distances to objects detected around parked vehicle 100 from sensor 110, and may determine the size of the driver's preferred parking space based on the collected information. In addition, controller 120 may collect information about parking spaces detected around vehicle 100 from sensor 110, and may determine whether the detected parking space is a space that satisfies the size of the driver's preferred parking space based on the collected information.

The size of the preferred parking space may be determined based on minimum distance among distances to objects around vehicle 100. In one embodiment of the present invention, the minimum distance that determines the size of the preferred parking space is characterized as being a lateral distance of the preferred parking space size, but this is exemplary and is not necessarily limited thereto. The process by which controller 120 determines the size of the preferred parking space will be described in detail later.

When the driver completes parking using autonomous parking function and changes the parking position before a preset time passes, controller 120 may adjust the size of the preferred parking space. Specifically, controller 120 may expand the preset preferred parking space size to the minimum distance detected by sensor 110 and determine the size of the expanded space as the size of the preferred parking space when the minimum distance among distances between vehicle 100 and surrounding objects detected by sensor 110 at the parking position before parking position change exceeds the boundary of the preset preferred parking space.

Meanwhile, controller 120 may reduce the preset preferred parking space size to the minimum distance detected by sensor 110 and determine the size of the reduced space as the size of the preferred parking space when the minimum distance among distances between vehicle 100 and surrounding objects detected by sensor 110 at the parking position after parking position change is included within the boundary of the preset preferred parking space.

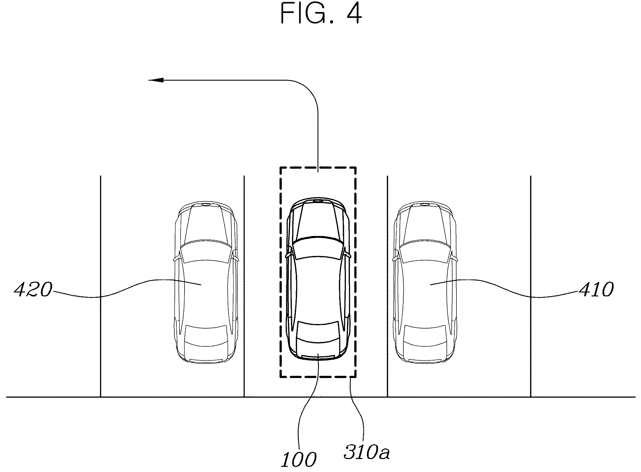

In addition, controller 120 may reduce the preset preferred parking space size to the minimum distance detected by sensor 110 and determine the size of the reduced space as the size of the preferred parking space when the minimum distance among distances between vehicle 100 and surrounding objects detected by sensor 110 is included within the boundary of the preset preferred parking space even when the driver completes parking using autonomous parking function and does not change the parking position even after a preset time has passed. The process by which controller 120 determines the size of the preferred parking space will be described in more detail through FIGS. 4 to 7.

Controller 120 may assign priorities to parking spaces around vehicle 100 detected from sensor 110. When assigning priorities, controller 120 may assign different rankings according to the size of parking spaces, presence of objects around vehicle 100, and types of the objects. For example, in one embodiment of the present disclosure, controller 120 may determine a high grade when the minimum distance among distances to objects around vehicle 100 detected by sensor 110 exceeds the boundary of a preset maximum size space. The maximum size space may be set differently depending on the driver, but this is exemplary and is not necessarily limited thereto. In addition, controller 120 may determine a high grade for the parking space when no object exists around the detected parking space, for example, on the left or right side of the parking space from sensor 110. Furthermore, controller 120 may determine a medium grade for the parking space when the minimum distance among distances to objects around vehicle 100 detected by sensor 110 is included between the boundary of the preferred parking space and the preset maximum space. Controller 120 may determine the parking space as an unparkable space when the minimum distance among distances to objects around vehicle 100 detected by sensor 110 invades the boundary of the preferred parking space. The method by which controller 120 distinguishes grades as described above is exemplary and is not limited thereto.

Steering system 130 may determine the steering angle of the steering wheel. Steering system 130 may include a steering wheel, steering column, steering gear device, power steering system, etc. Steering system 130 may be controlled by controller 120, and may adjust the steering angle of vehicle 100 based on information input by controller 120.

Braking system 140 may decelerate vehicle 100 or maintain a stopped state. Braking system 140 may include a brake pedal, power transmission device, hydraulic transmission path device, etc. Braking system 140 may be controlled by controller 120, and controller 120 may determine the braking torque of braking system 140 based on input information such as brake pedal operation amount or required braking torque.

Drivetrain 150 may apply power to drive wheels of vehicle 100. Drivetrain 150 may include an internal combustion engine, electric motor, transmission, etc. Drivetrain 150 may be controlled by controller 120, and controller 120 may determine the driving torque of vehicle 100 based on input information such as accelerator pedal operation amount or required torque.

Controller 120 may control steering system 130, braking system 140, and drivetrain 150 to control the behavior of vehicle 100 for each parking stage when vehicle 100 performs autonomous parking function.

Controller 120 may analyze surrounding environment information collected from sensor 110 to search for parking spaces, determine whether parking is possible in the searched corresponding spaces, and provide this visually to the driver through display 160. For example, in one embodiment of the present disclosure, parking spaces may be output to display 160 in the form of Around View Monitor (AVM), but this is exemplary and is not necessarily limited thereto. In addition,

Controller 120 may provide predetermined visual effects to edge areas of parking spaces through display 160 with colors corresponding to one or more grades distinguished as described above. Specifically, controller 120 may display high grade parking spaces with green borders, medium grade parking spaces with yellow borders, and unparkable spaces with red borders in the edge areas of parking spaces, but this is exemplary and is not necessarily limited thereto. In addition, parking spaces may have fixed grades corresponding to types of parking spaces as described above or relative grades may be determined by comparing multiple parking spaces detected by sensor 110.

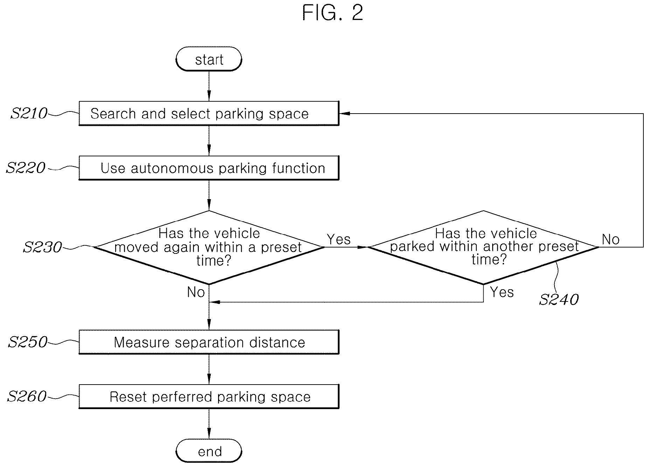

FIG. 2 shows a flowchart of a process for determining a size of a preferred parking space of a driver according to one embodiment of the present disclosure.

First, the driver may receive at least one or more parking spaces searched based on vehicle 100 surrounding environment information collected by controller 120 from sensor 110 through display 160, and may select one of the provided parking spaces in step S210. At this time, parking spaces may be output through display 160 by controller 120 in the form of Around View Monitor (AVM). When a space to park is selected by the driver, controller 120 may provide notification to the driver regarding whether to use autonomous parking function through display 160, and may determine whether to execute autonomous parking function according to the driver's response.

When the driver selects a parking space, the driver may use autonomous parking function in response to the provided notification in step S220.

Thereafter, controller 120 may detect whether vehicle 100 moved again within a preset time from the time vehicle 100 completed parking in step S230. When vehicle 100 moved again within the preset time (Yes in step S230), controller 120 may detect whether vehicle 100 completed parking within another preset time in step S240. When vehicle 100 did not complete parking (No in step S240), controller 120 may search for parking spaces and induce selection of parking spaces according to the driver's intention to search for parking spaces in step S210.

When the driver did not move vehicle 100 again after using autonomous parking function (step S230, No) or when the driver moved vehicle 100 again after using autonomous parking function and parked again (step S240, Yes), controller 120 may measure separation distances between the parked space and surrounding objects in step S250. For example, when another vehicle is parked on the side of the parked space, controller 120 may detect minimum distance between vehicle 100 and the vehicle parked on the side through sensor 110 and collect the corresponding information. Controller 120 may reset the size of the preferred parking space based on the collected information in step S250. For example, controller 120 may replace the minimum distance of the preferred parking space size with the minimum distance detected by sensor 110 when the minimum distance among distances between vehicle 100 and surrounding objects detected by sensor 110 at the parking position of parked vehicle 100 is less than the minimum distance of the preset preferred parking space size.

In addition, when the driver parked again within a preset time after using autonomous parking function (step S240, Yes), controller 120 may measure separation distances between vehicle 100 and surrounding objects based on information about minimum distance among distances between vehicle 100 and surrounding objects detected by sensor 110 at the parking position before parking position change in step S250, and may reset the size of the preferred parking space based on the corresponding information in step S260. Specifically, controller 120 may replace the minimum distance of the preferred parking space size with the minimum distance detected by sensor 110 when the minimum distance detected by sensor 110 exceeds the minimum distance of the preset preferred parking space.

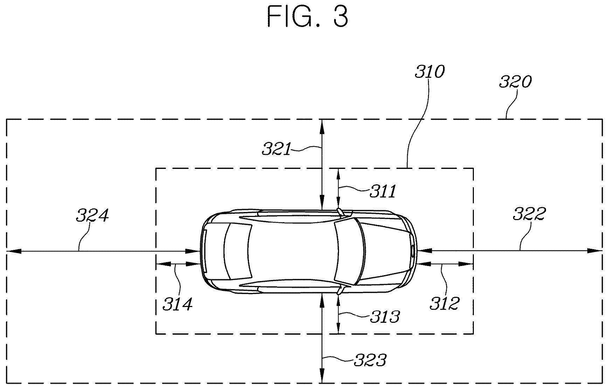

FIG. 3 shows an example of a form of preferred parking space size according to one embodiment of the present disclosure.

Referring to FIG. 3, the size of the preferred parking space may be defined as minimum size 310 and maximum size 320. First, minimum size 310 of the preferred parking space size may be determined by perpendicular distances 311, 312, 313, 314 from each side of the vehicle, and maximum size 320 of the preferred parking space size may likewise be determined by perpendicular distances 321, 322, 323, 324 from each side of the vehicle, but this is exemplary and is not necessarily limited thereto. In addition, in one embodiment of the present disclosure, minimum size 310 of the preferred parking space size may be adjusted by controller 120, and maximum size 320 may be set arbitrarily, but this is exemplary and is not necessarily limited thereto. In addition, in embodiments, minimum size 310 acts as a constraint condition for whether to attempt parking in detected spaces when using autonomous parking function, and maximum size 320 may act as a criterion for determining the grade of spaces larger than minimum size 310 rather than whether to attempt parking.

Hereinafter, forms in which minimum size 310 of the preferred parking space size is changed will be described in more detail through FIGS. 4 to 7.

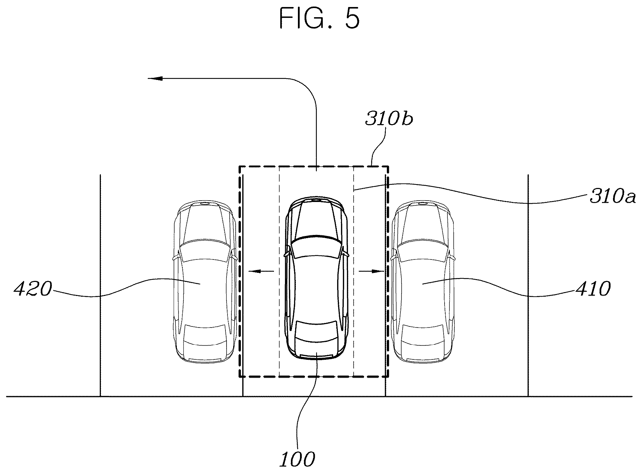

FIGS. 4 and 5 show examples of forms in which a size of preferred parking space is determined when a vehicle moves within a preset time after performing autonomous parking function according to one embodiment of the present disclosure.

Referring to FIG. 4, it is assumed that a space that satisfies minimum size 310a of the preferred parking space is searched between two vehicles 410, 420 through autonomous parking function in vehicle 100, and vehicle 100 is parked in the corresponding space. In a situation where parking is completed through autonomous parking function, vehicle 100 may measure separation distances to two vehicles 410, 420.

However, the driver may perform movement parking to another space within a preset time.

Referring to FIG. 5, a situation is shown where the driver directly drives vehicle 100 and moves it to another parking space in the same situation as FIG. 4. As described above, when the driver directly drives vehicle 100 and parks it in another location within a preset time after parking is performed through autonomous parking function, this may be due to dissatisfaction with the previously parked space. Therefore, minimum size 310a of the preferred parking space may be adjusted to extended size 310b based on distances to both vehicles 410, 420. The distances to both vehicles 410, 420 may use distances measured after completing autonomous parking as described with reference to FIG. 4.

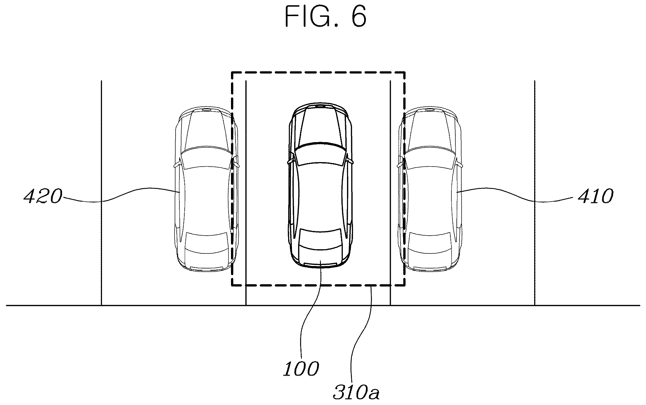

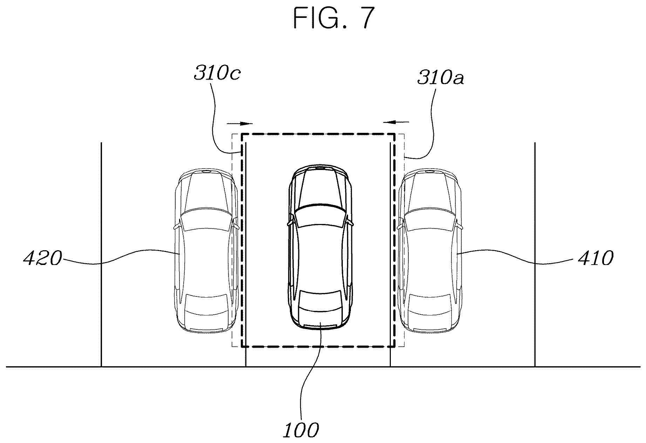

FIGS. 6 and 7 show examples of forms in which a size of preferred parking space is determined when a preset time passes after a vehicle performs autonomous parking function or after manual parking according to one embodiment of the present disclosure.

Referring to FIG. 6, similarly to FIG. 4, it is assumed that a space that satisfies minimum size 310a of the preferred parking space is searched between two vehicles 410, 420 through autonomous parking function in vehicle 100, and vehicle 100 is parked in the corresponding space.

Referring to FIG. 7, a situation where vehicle 100 parking is completed in the same situation as FIG. 6 is shown. As described above, when vehicle 100 continues to be parked even after a preset time after parking is performed through autonomous parking function, this may suggest that the parking space was sufficiently satisfactory. Therefore, minimum size 310a of the preferred parking space may be adjusted to reduced size 310c based on distances to both vehicles 410, 420.

Meanwhile, when the driver moves again and parks within a preset time after using autonomous parking function, minimum size 310a of the preferred parking space may be adjusted simultaneously at positions before and after parking position change. In this case, minimum size 310a of the preferred parking space may be determined by controller 120 in various ways. For example, controller 120 may determine minimum size 310a of the preferred parking space as the average size of minimum size 310b of the preferred parking space determined before parking position change and minimum size 310c of the preferred parking space determined after parking position change, or may determine minimum size 310b of the preferred parking space determined before parking position change as priority or minimum size 310c of the preferred parking space determined after parking position change as priority according to the driver's selection. However, the method of determining minimum size 310a of the preferred parking space is exemplary and is not limited thereto.

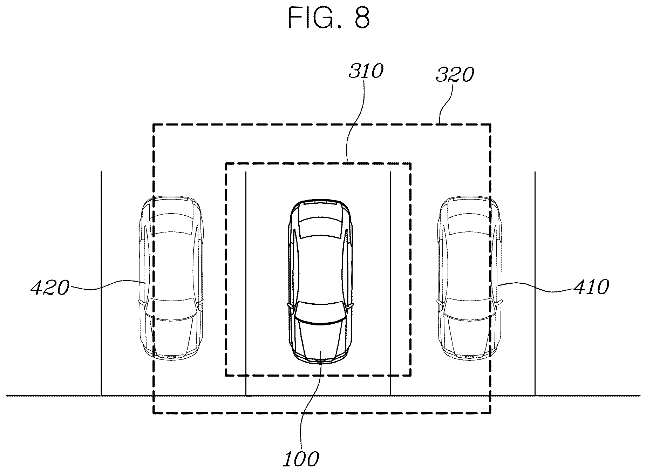

FIGS. 8 to 11 show examples of parking forms by priority of preferred parking space according to one embodiment of the present disclosure.

Referring to FIG. 8, vehicles 410, 420 parked on both sides of parked vehicle 100 are disposed between minimum size 310 and maximum size 320 of the preferred parking space. In one embodiment of the present disclosure, controller 120 may determine the parking space shown in FIG. 8 as a medium grade. This may be because the corresponding parking space satisfies minimum size 310 of the preferred parking space but does not provide additional merit to the driver. Controller 120 may display the corresponding parking space with a yellow border through the around view monitor of display 160. However, this is exemplary and is not limited thereto.

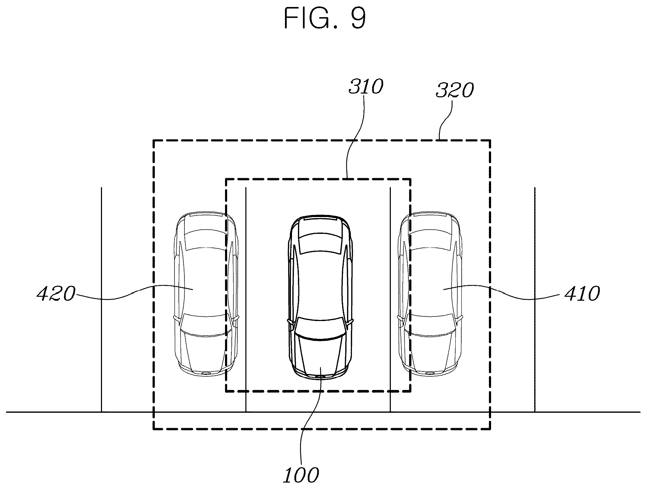

Referring to FIG. 9, vehicles 410, 420 parked on both sides of parked vehicle 100 are disposed invading the boundary of minimum size 310 of the preferred parking space. In one embodiment of the present disclosure, controller 120 may determine the parking space shown in FIG. 9 as an unparkable space. This is because the corresponding parking space did not satisfy minimum size 310 of the preferred parking space. Controller 120 may display the corresponding parking space with a red border through the around view monitor of display 160. However, this is exemplary and is not limited thereto.

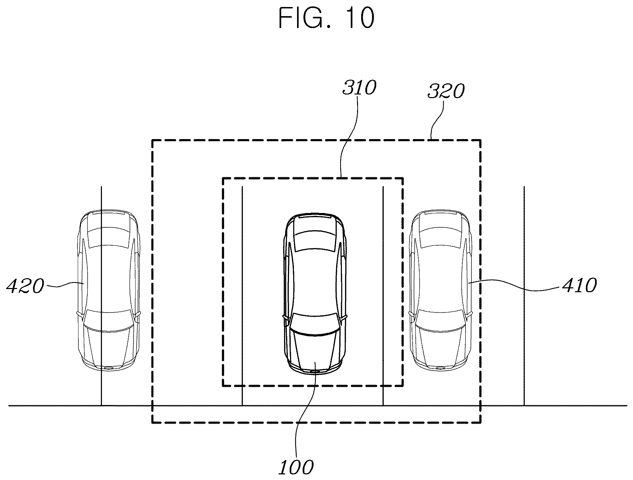

Referring to FIG. 10, among vehicles 410, 420 parked on both sides of parked vehicle 100, vehicle 420 that exceeds the boundary of maximum size 320 of the preferred parking space is disposed. In one embodiment of the present disclosure, controller 120 may determine a high grade for the corresponding parking space as shown in FIG. 10 when one of the vehicles disposed on both sides exceeds the boundary of maximum size 320 of the preferred parking space or when there is no parked vehicle. This may be because the corresponding parking space not only satisfies minimum size 310 of the preferred parking space but also has spatial merit by being larger than maximum size 320. Controller 120 may display the corresponding parking space with a green border through the around view monitor of display 160. However, this is exemplary and is not limited thereto.

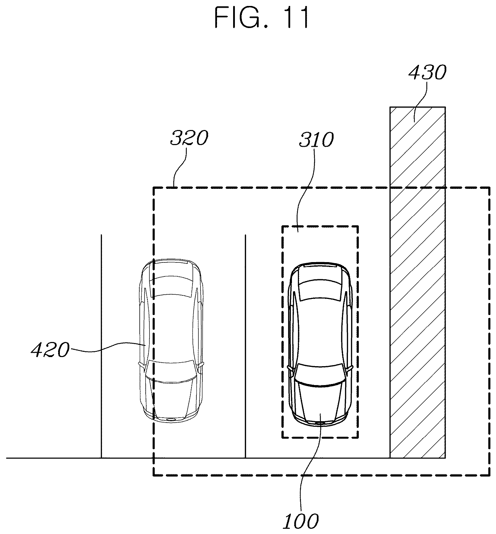

Referring to FIG. 11, there is structure 430 on one side of parked vehicle 100. In one embodiment of the present disclosure, controller 120 may determine a high grade for the corresponding parking space as shown in FIG. 11 when structure 430 exists on one side of vehicle 100 while satisfying minimum space 310. This may be because close parking of another vehicle in the direction where structure 430 exists is impossible in the future as well. Controller 120 may display the corresponding parking space with a green border through the around view monitor of display 160, but this is exemplary and is not necessarily limited thereto.

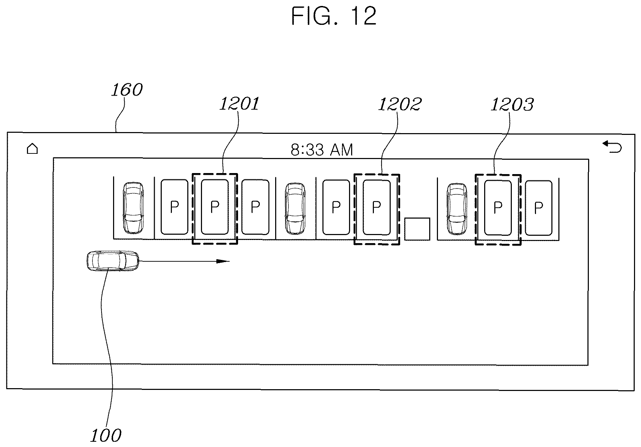

FIG. 12 shows an example of a form of outputting parking spaces around vehicle 100 and visual effects corresponding to priorities of each parking space through display 160 of vehicle 100 according to one embodiment of the present disclosure.

Referring to FIG. 12, controller 120 may compare surrounding parking spaces with the size of the preferred parking space based on information about the surrounding environment of vehicle 100 received from sensor 110, and may display grades corresponding to each parking space through display 160. Regarding the display method, referring to FIGS. 8 to 11, in one embodiment of the present disclosure, borders of each parking space may be displayed in different colors to distinguish grades and expressed on display 160. However, this is exemplary and is not necessarily limited thereto.

In addition, in one embodiment of the present disclosure, controller 120 may determine relative grades between one or more parking spaces detected from sensor 110, and may provide predetermined visual effects to edge areas corresponding to parking spaces with colors corresponding to the determined grades. For example, referring to FIG. 12, parking space 1201 with no parked vehicles on both sides and parking space 1202 located next to a pillar may be displayed with green borders as the same grade, and parking space 1203 with no parked vehicle on the left may be a parking space with relatively lower preference compared to parking space 1201 with no parked vehicles detected on both sides by sensor 110, so yellow visual effects may be provided to the edge area.

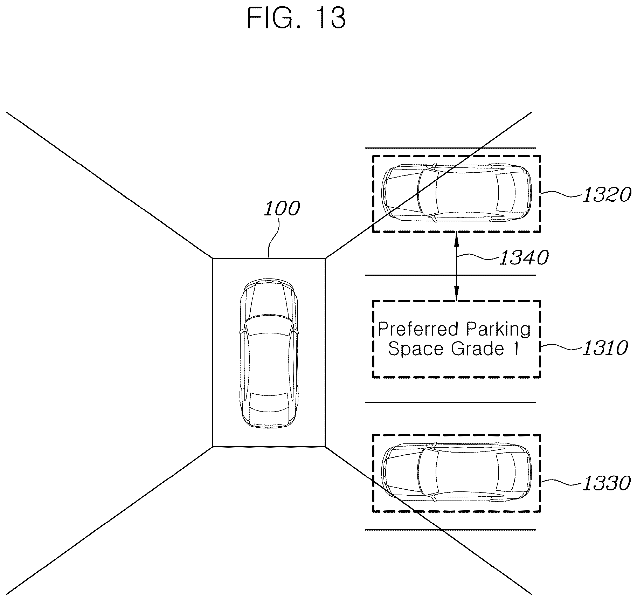

FIG. 13 shows an example of a form in which controller 120 provides parking spaces around vehicle 100 and visual effects corresponding to priorities of parking spaces through an around view monitor of display 160 according to one embodiment of the present disclosure.

Around view monitor is a function that captures the surroundings of a vehicle with one or more cameras, combines them, and provides a top view image as if looking down from above. Referring to FIG. 13, it can be confirmed that the around view monitor of display 160 is displaying parking space 1310 on the right side of vehicle 100. The displayed parking space 1310 may be distinguished by borders of colors indicating the grade of the corresponding space, or as shown in FIG. 13, preference grades may be displayed with characters such as '1', '2', '3' in dotted boxes, but this is exemplary and is not necessarily limited thereto. Meanwhile, parking space 1310 displayed in FIG. 13 can be seen as having grade '1' determined because distance 1340 to vehicle 1320 parked above exceeds the maximum distance of the preferred parking space.

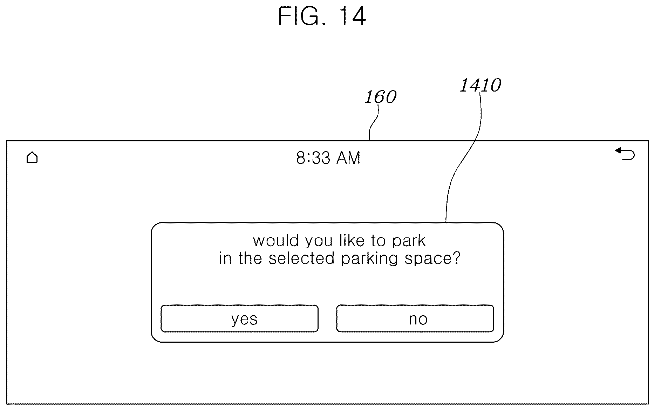

FIG. 14 shows an example of a form in which controller 120 provides notification to the driver regarding whether to use autonomous parking function through display 160 according to one embodiment of the present disclosure.

Controller 120 may receive parking space information around vehicle 100 through sensor 110, and may display parking spaces and grades of the corresponding spaces on the around view monitor of display 160 based on this. In addition, to enable the driver to decide whether to execute autonomous parking function in the displayed parking space, decision window 1410 may be provided on display 160 as shown in FIG. 14.

Therefore, in one embodiment of the present invention, controller 120 may provide preferred parking spaces to the driver before the driver of vehicle 100 uses autonomous parking function, and such preferred parking spaces may be reset for each driver.

Meanwhile, the present disclosure described above can be implemented as computer-readable code on a medium on which a program is recorded. Computer-readable media include all types of recording devices that store data that can be read by computer systems. Examples of computer-readable media include Hard Disk Drive (HDD), Solid State Disk (SSD), Silicon Disk Drive (SDD), ROM, RAM, CD-ROM, magnetic tape, floppy disk, optical data storage device, etc. Therefore, the detailed description above should not be interpreted as limiting in all aspects and should be considered as exemplary. The scope of the present invention should be determined by reasonable interpretation of the appended claims, and all changes within the equivalent scope of the present invention are included in the scope of the present invention.

## Claims

1. A vehicle comprising:
a sensor configured to detect distances to objects around the vehicle; and
a controller configured to determine a size of a preferred parking space of a driver based on the distances at a parking position changed within a preset time after use of an autonomous parking system controlling a parking process, and configured to output at least one of spaces that satisfy the size based on information obtained through the sensor.

2. The vehicle according to claim 1, wherein the size of the preferred parking space is determined based on a lower limit value of a distance among distances to one or more objects located around the vehicle.

3. The vehicle according to claim 2, wherein the controller is configured to replace the lower limit value of the distance with a distance detected by the sensor based on the distance detected by the sensor before the parking position change exceeding the previously determined lower limit value of the distance.

4. The vehicle according to claim 2, wherein the controller is configured to replace the lower limit value of the distance with a distance detected by the sensor based on the distance detected by the sensor at the changed parking position in case of the parking position being changed or at the parking position in case of the parking position not being changed being less than the previously determined lower limit value of the distance of the preferred parking space size.

5. The vehicle according to any one of claims 2 to 4, wherein the lower limit value of the distance is a lateral distance of the preferred parking space.

6. The vehicle according to any one of claims 2 to 5, wherein the controller is configured to assign priorities to spaces that satisfy the size based on the size, presence or types of surrounding objects.

7. The vehicle according to claim 6, wherein the controller is configured to assign different priorities respectively in case of the sensor not detecting an object, in case of a distance to an object detected by the sensor exceeding an upper limit value of a range of the preferred parking space size, or in case of an object detected by the sensor corresponding to a structure.

8. The vehicle according to claim 6, or 7, further comprising a display, wherein the controller is configured to control visual effects corresponding to priorities of the detected spaces to be output through the display based on spaces that satisfy the size being detected using information obtained through the sensor.

9. A method for determining parking space, the method comprising:
determining, by a controller, a size of a preferred parking space of a driver based on distances to objects around a vehicle detected by a sensor at a parking position changed within a preset time after use of an autonomous parking system controlling a parking process; and
outputting, by the controller, at least one of spaces that satisfy the size based on information obtained through the sensor.

10. The method of claim 9, wherein the size of the preferred parking space is determined based on a lower limit value of a distance among distances to one or more objects located around the vehicle.
